# EUROPEAN PATENT SPECIFICATION

(11) **EP 4 366 941 B1**
(45) Date of publication and mention of the grant of the patent: **03.09.2025**
(21) Application number: 22772568.6
(22) Date of filing: 01.07.2022
(51) Int. Cl.: B29D 30/30, B29D 30/44, B29D 30/24

(54) **METHOD AND DEVICE FOR FEEDING PIECES OF A CONTINUOUS ELONGATED ELEMENT TOWARDS A FORMING DRUM**
VERFAHREN UND VORRICHTUNG ZUM ZUFÜHREN VON TEILEN EINES KONTINUIERLICHEN LÄNGLICHEN ELEMENTS ZU EINER FORMTROMMEL
PROCÉDÉ ET DISPOSITIF PERMETTANT D'AMENER DES MORCEAUX D'UN ÉLÉMENT ALLONGÉ CONTINU VERS UN TAMBOUR DE MISE EN FORME

(30) Priority: 07.07.2021 IT 202100017867
(43) Date of publication of application: 15.05.2024
(73) Proprietor: Pirelli Tyre S.P.A., 20126 Milan (IT)
(72) Inventor: GIAMBERSIO, Dario, 20126 Milan (IT); PORTINARI, Gianni Enrico, 20126 Milan (IT); SANGIOVANNI, Stefano, 20126 Milan (IT)
(74) Representative: PGA S.p.A.
(86) International application number: PCT/IB2022/056152
(87) International publication number: WO 2023/281368

(56) References cited:
- WO-A1-2014/155258
- DE-A1- 2 740 609
- JP-A- 2020 203 425

## Description

### Technical field of the invention

The present invention relates to a method and device for feeding pieces of a continuous elongated element towards a forming drum. The present invention belongs to the field of apparatuses and processes for the production of tyres for vehicle wheels and it relates in particular to a method and a device capable of managing the continuous elongated elements intended to form tyre components in a manner such as to avoid damaging deformations thereof before assembly and thus guarantee the quality of the tyres produced.

### Prior art

A tyre for vehicle wheels generally comprises a carcass structure comprising at least one carcass ply having end flaps engaged with respective annular anchoring structures. A belt structure is associated in a radially outer position to the carcass structure, comprising one or more belt layers, arranged in radial superposition with respect to each other and with respect to the carcass ply, having textile or metallic reinforcing cords with crossed orientation and/or substantially parallel to a circumferential development direction of the tyre. A tread band is applied in a position radially outer to the belt structure, also made of elastomeric material like other semi-finished products making up the tyre. The assembly of at least said belt structure and said tread band form the crown structure of the tyre. Respective sidewall of elastomeric material are further applied on the lateral surfaces of the carcass structure, each extending from one of the lateral edges of the tread band up at the respective annular anchoring structure to the beads. In "tubeless" tyres, the carcass ply is internally coated by a preferably butyl-based layer of elastomeric material, usually called "liner" having airtight features and extending from one to the other of the beads. The tyre may comprise further components, such as, for example, under-liner, fillers in the bead area, sidewalls, sidewall inserts in self-supporting tyres, anti-abrasive inserts, under-layer, bead reinforcement layers (flipper), bead protection layers (chafer).

The building of the tyres may be carried out by assembling the respective components by placing semi-finished products on forming drums.

A "component" of the tyre means any functional component of said tyre (for example, under-liner, liner, carcass ply(ies), fillers in the bead area, belt layer(s), sidewalls, sidewall inserts in self-supporting tyres, anti-abrasive inserts, under-layer, tread band, reinforcement and bead protection layers, etc.) or a portion thereof.

A "semi-finished product" means an elongated element, made of elastomeric material only or comprising further structural elements, dispensed onto a forming drum to form a component of the tyre. The semi-finished product is preferably defined by a continuous elongated element shaped like a strip with a flattened section. For example, the further structural elements comprise one or more textile or metal reinforcing cords. Such textile or metal reinforcing cords are preferably arranged parallel to each other and inclined with respect to the longitudinal direction of the elongated element itself. Said continuous elongated element is preferably dispensed in a circumferential direction onto a forming drum, for example from a reel or from an extruder. Preferably, said semi-finished product is cut to size before dispensing onto the forming drum.

The term "elastomeric material" is meant to indicate a material obtained by mixing at least one elastomeric polymer and at least one reinforcing filler. Preferably, such material further comprises additives such as, for example, a cross-linking agent and/or a plasticiser. Due to the presence of the cross-linking agent, such material can be cross-linked by heating, so as to form the final manufactured article.

The expressions "low", "below", "lower" or "inferiorly", and "high", "above", "upper" or "superiorly" are used to designate a relative position with respect to the ground on which an apparatus is placed for its operation.

The term "advancement direction" is used to indicate a direction parallel to the longitudinal direction of at least one conveyor belt. The advancement direction therefore corresponds to the advancement direction of the conveyor belt.

The expressions "downstream"/"head" and "upstream"/"tail" are used with reference to the aforementioned advancement direction. Therefore, assuming for example an advancement direction from right to the left, a "downstream" or "head" position with respect to any reference element indicates a position to the left of said reference element and an "upstream" or "tail" position indicates a position to the right of said reference element.

Document WO2014/155258A1, in the name of the same Applicant, illustrates a process for manufacturing tyres for vehicle wheels, wherein at least one of the components of the green tyre is formed by dispensing a continuous elongated element made of elastomeric material along a feeding path. A length of such continuous elongated element is cut from a head section of the elongated element, advanced on a conveyor up to a forming drum and deposited on a surface radially external to the forming drum. Each of two portions of the elongated element placed on opposite sides of a transversal cutting line is arranged between an abutment surface and a coupling surface opposite each other and the elongated element is cut along such transversal cutting line while the two portions are so arranged. After cutting, each of the two portions is retained on the respective coupling surface and the coupling surfaces are moved towards the conveyor together with the two portions.

Document US2017/0015076A1 illustrates a method and a device for winding bead fillers on a forming drum, wherein a rubber strip is transported to the forming drum and a blade cuts the rubber strip with a predetermined length. When, during the transport towards the forming drum, a sensor detects the presence of a terminal end of the rubber strip, the suction cup carrying said rubber strip is temporarily stopped or slowed down. In this way, the rubber strip is stretched along its own longitudinal direction to compensate for its shortening after extrusion.

Document WO2015050437A1 illustrates a method for picking up and depositing a component of a tyre. The method comprises the steps of: picking up a first component of the tyre via a transfer drum, rotating the transfer drum in a first direction to wind a predetermined length of the first component, rotating the transfer drum in a second opposite direction, simultaneously moving the downstream transfer drum to a cutting position, where a part of the predetermined length of the first component is unwound from the transfer drum, cutting the unwound part, thus obtaining a first component of the tyre cut to size, and rotating the transfer drum again in the first direction for winding the unwound part of the first tyre component cut to size up to the rear end.

JP2017052102A discloses a device and method for feeding semi-finished material onto a tyre forming drum. The device comprises a guide roller arranged between a conveyor and the forming drum and a transfer roller arranged over the conveyor and over the guide roller and astride them. The device is configured to transmit the rotational movement of the conveyor to the guide roller via the transfer roller, contacting the transfer roller with the conveyor and the guide roller.

Document DE2740609A1 discloses a device for building pneumatic tyres comprising a winding drum provided for taking up and transferring treads, side strips or other parts of tyres on a building drum. The winding drum is loaded with an endless strip through a feed roller and a fixed support. A splitting knife is provided for cutting off the strip into the necessary length of plies. Over the support, a supporting device separated into two parts is arranged so that it can be displaced tangentially in relation to the winding drum to lift and transport the strip.

### Summary

The Applicant has observed that the quality of the tyres produced and built on the forming drums depends on various factors, among which the correct deposition and the correct winding of the pieces of continuous elongated elements around the forming drum which in turn depend on the correct management of said continuous elongated elements by means of devices placed upstream of the forming drum, or of dispensing, cutting and transport devices, such as those described in the aforementioned prior art documents.

In particular, the Applicant has observed that the shape of the cut pieces and their spatial position on the forming drum depend on the operations performed upstream of the forming drum and related to the transport of the continuous elongated element, to the execution of the cutting to size thereof, i.e. the correct positioning under the cutting blade before and during cutting, the subsequent transport of the cut piece and its deposition on the forming drum.

In particular, the Applicant has observed that, in the known devices and methods, the continuous elongated elements risk being deformed during the transport and cutting steps, in particular, but not necessarily, if these continuous elongated elements only consist of elastomeric material, i.e. they do not include the additional structural elements mentioned above.

The Applicant has also observed that the transport and cutting steps identified above are more critical when the continuous elongated semi-finished product has an asymmetrical section, such as the continuous elongated semi-finished product used for manufacturing the sidewall inserts for self-supporting tyres which are also lacking the additional structural elements.

The Applicant has in particular observed that the continuous elongated element used for manufacturing the sidewall inserts, being often asymmetrical and not reinforced, has geometric features which negatively impact on the possibility of guiding it along a rectilinear trajectory without deforming it. For example, the Applicant has observed that contact with idle rollers, such as those illustrated in document WO2015050437A1, generates drift forces that are difficult to control.

The Applicant has therefore felt the need to improve the management of these continuous elongated elements and of the pieces obtained therefrom before and during their deposition on the forming drum.

The Applicant has in particular felt the need to maintain the geometric and mechanical features of the continuous elongated elements during cutting and in the various transport steps before and after cutting.

The Applicant has perceived that the above drawbacks could be solved by accompanying the continuous elongated element from its dispensing point to the cutting area and up to the deposition point on the forming drum.

The Applicant has finally found that by using a motorised conveyor configured to support and accompany the continuous elongated element up to a cutting unit, blocking a portion of said continuous elongated element during the execution of the cut and subsequently supporting, accompanying and depositing a cut piece on the forming drum, the object of managing the elongated elements that preserves the geometric and mechanical features thereof is achieved.

In a first aspect, the present invention relates to a method for feeding pieces of a continuous elongated element towards a forming drum according to claim 1.

In a second aspect, the present invention relates to a device for feeding pieces of a continuous elongated element towards a forming drum according to claim 9.

The Applicant believes first of all that the present invention allows the management of the continuous elongated elements and of the pieces obtained therefrom to be improved before and during their deposition on the forming drum.

The Applicant has in fact verified that the present invention allows the geometric and mechanical features of the continuous elongated element during transport towards the cutting unit and of the cut pieces during transport from the cutting unit to the forming drum to be maintained.

The Applicant has in fact verified that the present invention allows undesirable deformation (for example stretching or reshaping) of the continuous elongated element and the cut pieces to be prevented.

The Applicant has also verified that the present invention allows said pieces to be precisely deposited on the forming drum so that their geometry and their structure are those designed.

The Applicant has also verified that the above objects are achieved even if the continuous elongated element and the pieces deriving therefrom have an asymmetrical section and/or are devoid of structural elements, such as textile or metal reinforcing cords.

The Applicant therefore believes that the present invention allows the quality of the tyres produced to be improved.

The present invention, in at least one of the above aspects thereof, may exhibit one or more of the further preferred features described below.

Preferably, during step i. provision is made for picking up said head end of said continuous elongated element by means of a manipulation element.

Preferably, during step ii. provision is made for transporting said head end towards said deposition surface by means of said manipulation element.

Preferably, during step iv. provision is made for blocking said continuous elongated element at the cutting zone by means of said manipulation element.

Preferably, during step v. provision is made for maintaining blocked said continuous elongated element at the cutting zone by means of said manipulation element.

Preferably, during step vi. provision is made for picking up said tail end of the piece by means of the manipulation element or an auxiliary manipulation element.

Preferably, during step vii. provision is made for transporting the tail end by means of the manipulation element or the auxiliary manipulation element towards the deposition surface.

Preferably, also during step iii., the motorized conveyor is moved by the motor in order to accompany the continuous elongated element and prevent deformations of said continuous elongated element.

Preferably, during step ii., a linear velocity of the manipulation element is equal to a linear velocity of the motorized conveyor.

Preferably, during step iii., a linear velocity of the deposition surface is equal to a linear velocity of the motorized conveyor.

Preferably, during step vii., a linear velocity of the manipulation element is equal to a linear velocity of the deposition surface.

Preferably, during step vii., a linear velocity of the auxiliary manipulation element is equal to a linear velocity of the deposition surface.

Preferably, during step iii., the blade and the counter-blade are maintained spaced from the continuous elongated element.

Preferably, the motorized conveyor has one end close to the counter-blade and transports the continuous elongated element up to above said counter-blade.

Preferably, step iv. comprises: retaining the continuous elongated element between the manipulation element and the counter-blade.

Preferably, step iv. it further comprises: retaining the continuous elongated element between the auxiliary manipulation element and the counter-blade.

Preferably, step iv. further comprises: retaining the continuous elongated element between a retainer element and the counter-blade.

Preferably, in steps iv. and v., the manipulation element and the auxiliary manipulation element are situated respectively upstream and downstream of the blade.

Preferably, in steps iv. and v., the manipulation element and the retainer element are situated respectively upstream and downstream of the blade.

Preferably, after step viii., provision is also made for: retaining a subsequent head end of the continuous elongated element between the manipulation element and the counter-blade.

Preferably, steps vi., vii. and viii. are executed by means of the manipulation element while a subsequent head end of the continuous elongated element is retained between the retainer element and the counter-blade.

Alternatively, steps vi., vii. and viii. are executed by means of the auxiliary manipulation element while a subsequent head end of the continuous elongated element is retained between the manipulation element and the counter-blade.

Preferably, step v. comprises: arranging the blade in a plane that is angled with respect to a plane orthogonal to an advancement direction of the continuous elongated element and moving the blade in said angled plane.

Preferably , the deposition surface is a surface radially external to a forming drum. Preferably, step iii. comprises: rotating the forming drum.

Preferably, step vii. comprises: transporting the tail end towards the forming drum while the forming drum rotates.

Preferably, step viii. comprises: releasing the tail end on the forming drum.

Preferably, the deposition surface belongs to a motorized transfer element placed upstream of a forming drum.

Preferably, step iii. comprises: moving the motorized transfer element.

Preferably, step vii. comprises: transporting the tail end towards the motorized transfer element while said motorized transfer element moves.

Preferably, step viii. comprises: releasing the tail end onto the motorized transfer element.

Preferably, provision is made for: ix. moving the motorized transfer element and rotating the forming drum in order to transfer the piece on said forming drum.

Preferably, the motorized conveyor is a belt conveyor.

Preferably, the motorized conveyor is a roller conveyor.

Preferably, the blade lies and is movable in a lying plane that is angled with respect to a plane orthogonal to an advancement direction of the motorized conveyor.

Preferably, the cutting unit also comprises a retainer element movable between a position close to the counter-blade, in order to retain the continuous elongated element between the retainer element and the counter-blade, and a position spaced from the counter-blade.

Preferably, the retainer element, when it is in the position close to the counter-blade, is situated upstream of the blade.

Preferably, the manipulation element, when it is in the cutting unit, is movable between a position close to the counter-blade, in order to block the continuous elongated element in the cutting unit, and a position spaced from the counter-blade.

Preferably, the manipulation element, when it is situated in the cutting unit, is positionable downstream of the blade, in order to be engaged with a tail end of the piece to be cut, or upstream of the blade, in order to be engaged with a head end of a subsequent piece to be cut.

Preferably, the manipulation unit comprises an auxiliary manipulation element.

Preferably, the auxiliary manipulation element is configured for blocking the continuous elongated element in the cutting unit while the cutting unit cuts a piece from said continuous elongated element.

Preferably, the manipulation element is configured to transport the head end of the piece towards the deposition surface and the auxiliary manipulation element is configured to transport the tail end of the piece towards the deposition surface.

Preferably, the auxiliary manipulation element, when it is situated in the cutting unit, is positionable downstream of the blade, in order to be engaged with a tail end of the piece to be cut.

Preferably, the manipulation element, when it is situated in the cutting unit, is positionable upstream of the blade, in order to be engaged with a head end of a subsequent piece to be cut.

Preferably, the manipulation element and the auxiliary manipulation element are independently movable with respect to each other.

Preferably, a meter for the length of the continuous elongated element is operative at the motorized conveyor.

Preferably, the manipulation element comprises a gripper or a plurality of needles or a vacuum system.

Preferably, the deposition surface is a surface radially external to a forming drum.

Preferably, a motorized transfer element is placed between the cutting unit and the forming drum.

Preferably, the deposition surface belongs to said motorized transfer element.

Preferably, the motorized transfer element comprises a transfer wheel.

Preferably, the motorized transfer element comprises a belt or roller conveyor.

Preferably, the continuous elongated element is unwound from a reel and subsequently deposited on the motorized conveyor.

Preferably, the continuous elongated element unwound from the reel is placed directly on the motorized conveyor or on an auxiliary motorized conveyor interposed between the reel and the motorized conveyor.

Preferably, a reel-holder carrying the continuous elongated element wound in a reel is placed upstream of the motorized conveyor.

Preferably, the continuous elongated element comprises only elastomeric material, i.e. it is not provided with reinforcing elements, such as reinforcing cords.

Preferably, the continuous elongated element wound on a reel is coupled to a support film.

Preferably, the support film is separated from the continuous elongated element before the continuous elongated element rests on the motorized conveyor.

Preferably, a separation device operatively located between the reel-holder and the motorized conveyor is configured to separate the support film from the continuous elongated element.

Preferably, the continuous elongated element is produced and dispensed by an extruder.

Preferably, an extruder is placed upstream of the motorized conveyor and is configured to produce and dispense the continuous elongated element.

Preferably, the motorized conveyor comprises a belt wound on at least one pair of rollers, wherein at least one of the rollers of said pair of rollers is connected to the motor.

Preferably, the motorized conveyor comprises a plurality of rollers, wherein each of said rollers is connected to the motor.

Preferably, the continuous elongated element rests on one or more upper surfaces of the motorized conveyor.

Preferably, the counter-blade has a surface made of non-stick material configured to come into contact with the continuous elongated element.

Preferably, the counter-blade is rotatable and/or translatable between the first position and the second position.

Preferably, the blade is movable between a first position, in which it lies in proximity to a path of the continuous elongated element in order to cut said continuous elongated element, and a second position, in which it lies spaced from said path.

Preferably, the lying plane of the blade and a first plane parallel to the advancement direction and orthogonal to a support plane of the continuous elongated element on the counter-blade define a first line of intersection and said first line of intersection delimits with a second plane orthogonal to the advancement direction a first inclination angle.

Preferably, the first inclination angle is comprised between 45° and 80°.

Preferably, the lying plane of the blade and a support plane of the continuous elongated element on the counter-blade define a second line of intersection and said second line of intersection defines a second inclination angle with a second plane orthogonal to the advancement direction.

Preferably, the second inclination angle is comprised between 0° and 60°.

Preferably, the meter for the length is a metric wheel placed above the motorized conveyor and configured to engage with the continuous elongated element, preferably with an upper surface of the continuous elongated element.

Preferably, the auxiliary manipulation element comprises a gripper or a plurality of needles or a vacuum system.

Preferably, the manipulation element is movable in an area situated above the counter-blade and above the deposition surface.

Preferably, the manipulation element engages or is configured to engage an upper surface of the continuous elongated element.

Preferably, the auxiliary manipulation element is movable in an area situated above the counter-blade and above the deposition surface.

Preferably, the auxiliary manipulation element engages or is configured to engage an upper surface of the continuous elongated member.

Preferably, the forming drum is located downstream of the transfer wheel.

Preferably, the forming drum is placed at a distal end of the belt or roller conveyor.

Preferably, the forming drum is placed above or below the distal end of the belt or roller conveyor.

Preferably, during step ix. (moving the motorized transfer element and rotating the forming drum to transfer the piece onto said forming drum), provision is made to rotate the forming drum in one direction if it is under the distal end of the belt or roller conveyor and in the opposite direction if it is above the distal end of the belt or roller conveyor.

Preferably, during steps i. and ii., the auxiliary manipulation element is in a release position, preferably the auxiliary manipulation element is moved beyond the deposition surface.

Preferably, in order to carry out step iv., the manipulation element and the auxiliary manipulation element are moved together in the cutting zone.

Preferably, after step viii., the auxiliary manipulation element is returned to the release position.

Preferably, the piece is placed on a radially external surface of the forming drum or on a surface radially external to the forming drum.

Preferably, the method described in the preceding aspects is performed simultaneously with two continuous elongated elements and/or the device described in the preceding aspects is double, for feeding two pieces of continuous elongated element towards the forming drum at the same time and placing them on two circumferential areas and axially spaced apart from each other of the forming drum.

Further features and advantages will become more apparent from the detailed description of preferred but non-exclusive embodiments of a device and a method for feeding pieces of a continuous elongated element towards a forming drum, according to the present invention.

### Description of the figures

Such description is given hereinafter with reference to the accompanying drawings, provided only for illustrative and, therefore, non-limiting purposes, in which:
- Figure 1 schematically shows a device according to the present invention associated with a forming drum and operating on a continuous elongated element;
- Figures 2 - 11 illustrate a portion of the device of Figure 1 in respective operating steps;
- Figure 12 schematically shows a variant of the device of the preceding figures;
- Figures 13 - 21 illustrate a portion of a different embodiment of the device according to the present invention in respective operating steps;
- Figure 22 illustrates an enlarged and perspective portion of a cutting area of the device of the preceding figures;
- Figure 23 is top view of the portion of Figure 22;
- Figure 24 is a lateral elevation view of the portion in Figure 22; and
- Figure 25 is a radial half-section of a tyre for vehicle wheels.

### Detailed description

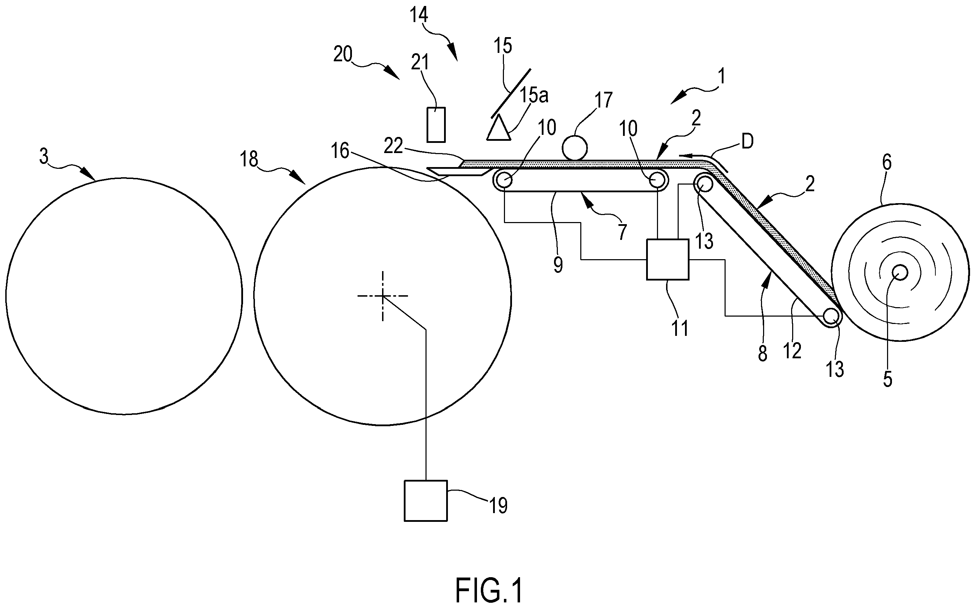

With reference to Figure 1, the reference numeral 1 generally indicates a device for feeding pieces of a continuous elongated element 2 towards a forming drum 3. The device 1 and the forming drum 3 are part of an apparatus, not shown as a whole, for manufacturing tyres 100 for vehicle wheels.

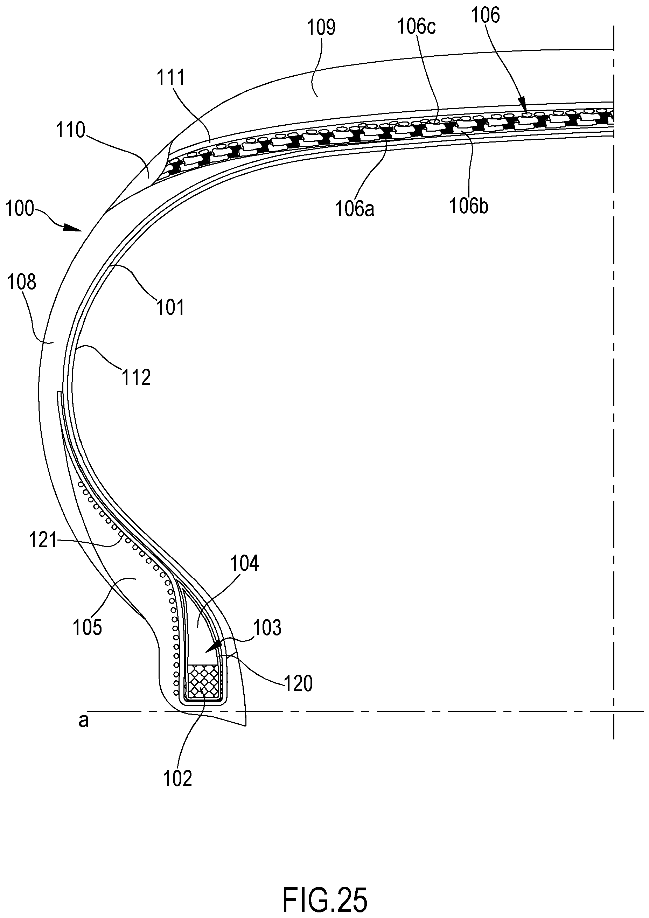

A tyre 100 is shown in Figure 25 and it comprises at least one carcass structure, comprising at least one carcass ply 101 having respectively opposite end flaps engaged with respective annular anchoring structures 102, referred to as bead cores, possibly associated to a filling insert 104. The tyre area 100 comprising the bead core 102 and the filling insert 104 forms a bead structure 103 intended for anchoring tyre 100 onto a corresponding mounting rim, not shown. An anti-abrasive element 105 made of elastomeric material is arranged in an external position of each bead structure 103.

In an axially internal or axially external position to said at least one carcass ply 101, the so-called sidewall inserts made of elastomeric material (not shown in Figure 25) may be provided which in the event of loss of inflation air allow the flat running of the tyre 100.

The carcass structure is associated to a belt structure 106 comprising one or more belt layers 106a, 106b, 106c placed in radial superposition with respect to one another and with respect to said at least one carcass ply, having metallic and/or textile and/or hybrid reinforcing cords.

A tread band 109 is applied in a position radially external to the belt structure 106, made of elastomeric material like other semi-finished products making up the tyre 100. Moreover, respective sidewalls 108 of elastomeric material are applied in an axially external position on the lateral surfaces of the carcass structure, each extending from one of the lateral edges of the tread band 109 at the respective bead structure 103.

An under-layer 111 may possibly be arranged between the belt structure 106 and the tread band 109. A strip 110 consisting of elastomeric material, commonly known as a "mini-sidewall", may possibly be present in the connection area between the sidewalls 108 and the tread band 109.

In the case of tubeless tyres, a generally butyl rubber layer 112, generally known as "liner", which provides the necessary impermeability to the inflation air of the tyre, is arranged in a radially internal position with respect to the carcass ply 101.

The rigidity of the sidewall 108 of the tyre 100 may be improved by providing the bead structure 103 with a reinforcing layer 120 generally known as "flipper" or additional strip-like insert. The "flipper" 120 is a reinforcing layer which is wound around the respective bead core 102 and the filling insert 104 so as to at least partially surround them, said reinforcing layer being arranged between the at least one carcass ply 101 and the bead structure 103. Usually, the "flipper" is in contact with said at least one carcass ply 101 and said bead structure 103. The "flipper" 120 typically comprises a plurality of metallic or textile cords (for example aramid or rayon) incorporated within a cross-linked elastomeric material.

The bead structure 103 of the tyre may comprise a further protective layer which is generally known by the term of "chafer" 121 or protective strip and which has the function of increasing the rigidity and integrity of the bead structure 103. The "chafer" 121 usually comprises a plurality of cords incorporated in a cross-linked elastomeric material. The cords are generally made of textile materials (such as aramid or rayon) or metal materials (such as steel cords).

The aforementioned components of the tyre 100 are made on one or more drums by moving said drums between different stations for dispensing semi-finished products at each of which suitable devices apply the aforementioned semi-finished products to the drum or drums.

For example, the apparatus, not shown, comprises a carcass building line, at which the forming drums 3 are moved between different dispensing stations of semi-finished products arranged to form, on each forming drum 3, a carcass sleeve comprising for example the carcass plies 101, the liner 112, the bead cores 102, the "flipper" 120, the "chafer" 121 and possibly at least a part of the sidewalls 108.

At the same time, in an outer sleeve building line, one or more auxiliary drums, not shown, are moved between different work stations designed to form an outer sleeve on each auxiliary drum, for example comprising the belt structure 106, the tread band 109, and possibly at least part of sidewalls 108.

The apparatus further comprises an assembling station at which the outer sleeve is coupled to the carcass sleeve to define the built green tyre 100.

The green built tyres 100 are finally transferred to at least one shaping, moulding and vulcanisation station.

The device 1 for feeding pieces of a continuous elongated element 2 towards the forming drum 3 is for example part of the carcass building line and is configured to cut pieces 4 of said continuous elongated element 2 and place them on the forming drum 3. Such pieces 4 form, for example, sidewall inserts made of non-reinforced elastomeric material, that is, without the reinforcing cords. Such pieces 4 may for example be deposited on a cylindrical surface belonging to semi-finished products of the tyre 100 being formed which have been previously applied to the radially external surface of the forming drum 3.

In the illustrated embodiment, the device 1 comprises a reel-holder 5 which carries the continuous elongated element 2 combined with a support film, not shown, and wound in a reel 6. The support film has the function of avoiding the adhesion of the coils of the continuous elongated element 2 when it is wound on the reel-holder 5 and of supporting it and avoiding the deformation thereof in the event that said continuous elongated element 2 is devoid of reinforcing cords. In embodiments not shown, instead of the reel-holder 5 there may be an extruder configured to produce and dispense the continuous elongated element 2.

The device 1 comprises a motorized conveyor 7 and an auxiliary motorized conveyor 8. The auxiliary motorized conveyor 8 is placed downstream of the reel-holder 5 and the motorized conveyor 7 is placed downstream of the auxiliary motorized conveyor 8 with respect to an advancement direction "D" of the continuous elongated element 2 which is unwound from the reel 6. Between the reel 6 and the auxiliary motorized conveyor 8, a separation device is arranged, known per se and not illustrated, configured to separate the support film from the continuous elongated element 2 before the continuous elongated element 2 rests on the auxiliary motorized conveyor 8.

The motorized conveyor 7 comprises a belt 9 wound on at least one pair of rollers 10 operatively connected to a motor 11, shown schematically. Similarly, the auxiliary motorized conveyor 8 comprises a belt 12 wound on at least one pair of rollers 13 operatively connected to a motor, for example to the same motor 11 just mentioned.

A proximal end of the auxiliary motorized conveyor 8 is placed at the reel-holder 5 and the reel 6 and a distal end of the auxiliary motorized conveyor 8 is placed at a proximal end of the motorized conveyor 7.

In embodiments not shown, the motorized conveyor 7 and the auxiliary motorized conveyor 8 may be roller conveyors comprising a plurality of motorized rollers arranged one after the other, so that the continuous elongated element 2 rests and is dragged by a peripheral surface of each roller.

Downstream of the motorized conveyor 7 and at a distal end of said motorized conveyor 7, a cutting unit 14 is provided.

The motorized conveyor 7 and the auxiliary motorized conveyor 8 are configured to transport, on respective branches or upper surfaces of the belts 9, 12 thereof, the continuous elongated element 2 unwound from the reel 6. The motor 11 causes the rotation of the rollers 10, 13 which in turn move the respective belts 9, 12. The upper branches of the belts 9, 12 are made to advance towards the cutting unit 14 and drag the continuous elongated element 2.

The cutting unit 14 is placed immediately downstream of the motorized conveyor 7 and is configured for cutting in pieces the continuous elongated element 2 coming from the motorized conveyor 7.

The cutting unit 14 comprises a blade 15 and a counter-blade 16. The counter-blade 16 is a plate having an upper surface made of non-stick material configured to come into contact with the continuous elongated element 2 and support it. The blade 15 is placed above the counter-blade 16. The blade 15 and the counter-blade 16 are movable between a first configuration, in which they lie close to each other or in mutual contact, to cut the continuous elongated element 2 interposed between them, and a second configuration, in which the blade 15 and the counter-blade 16 are spaced from each other.

In the illustrated example, the blade 15 is movable between a first position, in which it lies in proximity to a path of the continuous elongated element 2 in order to cut said continuous elongated element, and a second position, in which it lies spaced from said path. The blade 15 lies and is movable, by means of actuators and mechanisms not illustrated, in a lying plane that is angled with respect to a plane orthogonal to the advancement direction "D" of the motorized conveyor 7 and of the continuous elongated element 2.

The counter-blade 16 is movable between a first position, in which it lies in proximity to the aforementioned path of the continuous elongated element 2 in order to support said continuous elongated element 2, and a second position, in which it lies spaced from said path, in order to allow the continuous elongated element 2 to advance without dragging against the counter-blade 16. For example, the counter-blade 16 can translate and/or rotate between the first and second positions.

In the example of Figure 1, the cutting unit 14 also comprises a retainer element 15a placed above the counter-blade 16 and movable between a position close to the counter-blade 16, to retain the continuous elongated element 2 between the retainer element and the counter-blade during cutting, and a position spaced from the counter-blade 16. The retainer element 15a is positioned upstream of the blade 15.

The device 1 comprises a meter 17 for the length of the continuous elongated element 2, the meter 17 for the length is for example a metric wheel placed above the motorized conveyor 7 and configured to engage with an upper surface of the continuous elongated element 2 in a manner to be rolled on the continuous elongated element 2 while it advances transported by the motorized conveyor 7.

Downstream of the cutting unit 14 there is a motorized transfer element 18 which lies interposed between said cutting unit 14 and the forming drum 3. In the example of Figure 1, the motorized transfer element 18 is a transfer wheel which is rotated by a dedicated motor 19. The counter-blade 16 lies close to a radially external surface of the transfer wheel and a virtual plane in which the upper surface of the counter-blade 16 lies is substantially tangent to said radially external surface.

The forming drum 3 is also mounted on a motorized support, not shown, capable of making it rotate.

The device 1 further comprises a manipulation unit 20 which, in the embodiment of Figure 1, comprises a single manipulation element 21. The manipulation unit 20 is arranged above the counter-blade 16 and above the transfer wheel and comprises guides, mechanisms and actuators, not shown, operatively connected to the manipulation element 21 and configured to move said manipulation element 21 both horizontally, that is, along a direction parallel to the upper branch of the motorized conveyor 7 and parallel to the upper surface of the counter-blade 16, and vertically. The manipulation element 21 is movable horizontally between the cutting unit 14 and the radially external surface of the transfer wheel which constitutes a deposition surface, as will be explained later on. The manipulation element 21 is vertically movable between a raised position and a lowered position. The manipulation element 21, schematically illustrated in the accompanying figures, comprises for example a gripper or a plurality of needles or a vacuum system and is configured to engage with an upper surface of the continuous elongated element 2, retain and lift it. For example, the manipulation element 21 has a lower surface provided with holes in fluidic connection with a suction source which can be activated and deactivated on command.

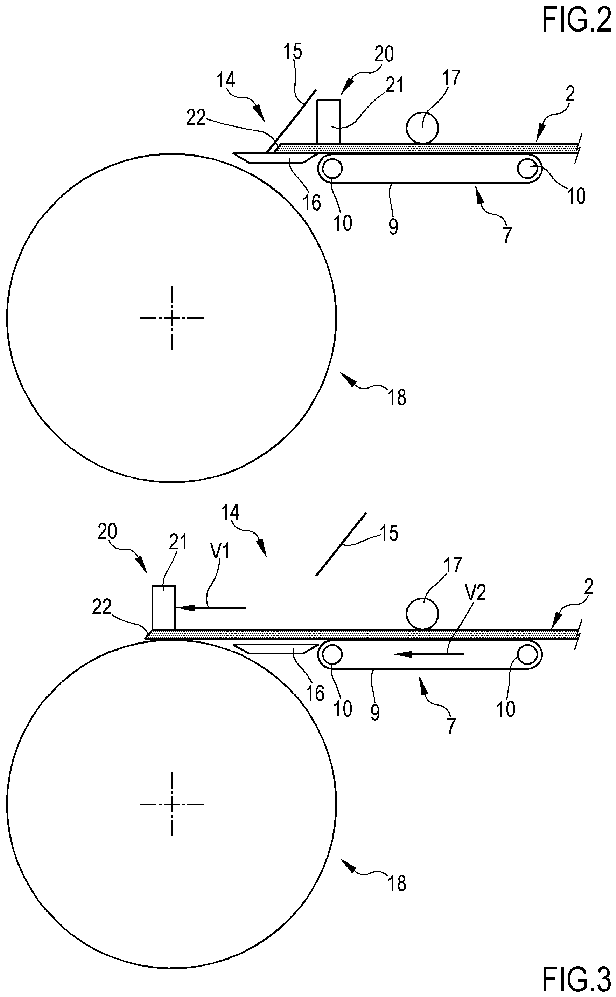

In use and according to the method of the present invention, the continuous elongated element 2, unwound from the reel 6 and deprived of the support film, lies on the upper branch of the auxiliary motorized conveyor 8 and on the upper branch of the motorized conveyor 7. A head end 22 of the continuous elongated element 2 lies resting on the upper surface of the counter-blade 16 while the counter-blade 16 is in its first position and the motorized conveyors 7, 8 are stationary. The manipulation element 21 is in the lowered position upstream of the blade 15 and lies against a region of the continuous elongated element 2 close to the head end 22. In this position, the manipulation element 21 holds the continuous elongated element 2 against the counter-blade 16 (Figure 2).

By activating the suction source, the continuous elongated element 2 adheres against the lower surface of the manipulation element 21. The blade 15 is raised, that is, brought into its second position. The counter-blade 16 is brought into its second position and the manipulation element 21 is translated, possibly lifting it slightly, up to the radially external surface of the transfer wheel, so as to bring the head end 22 of the continuous elongated element 2 on said transfer wheel while the transfer wheel is stationary (Figure 3). In this step, the motorized conveyor 7 and the auxiliary motorized conveyor 8 are set in motion by the motor 11 to accompany the continuous elongated element 2. Furthermore, a horizontal linear velocity V1 of the manipulation element 21 is equal to a linear velocity V2 of the upper branches of the motorized conveyor 7 and of the auxiliary motorized conveyor 8.

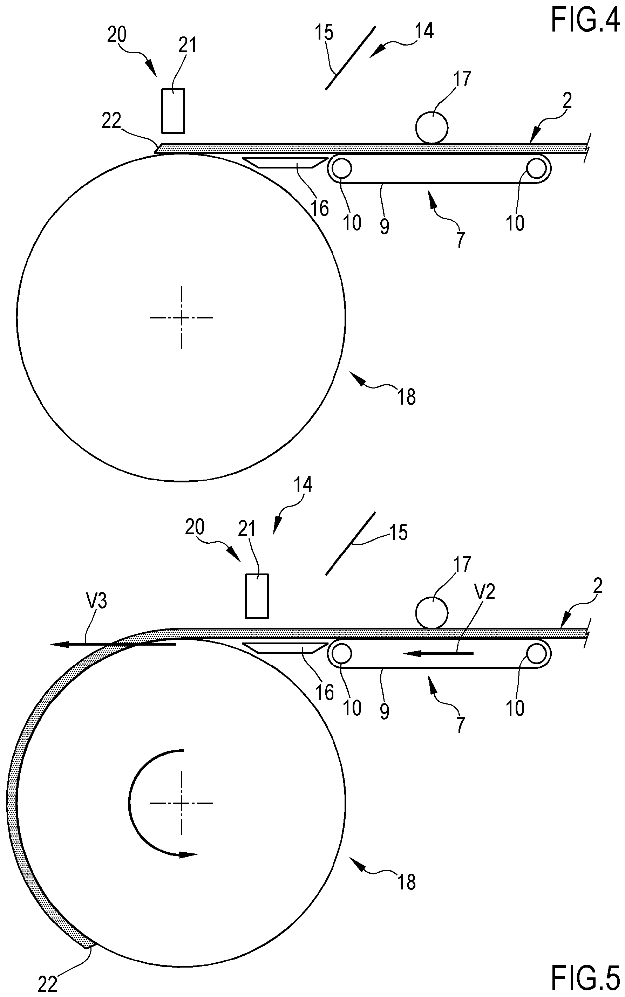

The head end 22 is released on the transfer wheel by deactivating the suction source connected to the manipulation element 21, lifting the manipulation element 21 and possibly activating a suction on the radially external surface of the transfer wheel (Figure 4).

The transfer wheel is rotated in a first direction (counter-clockwise in Figure 5) and at the same time the motorized conveyor 7 and the auxiliary motorized conveyor 8 are set in motion again, so that the continuous elongated element 2 winds partially on the transfer wheel for a predefined length measured using the metric wheel (figure 5). A linear velocity V3 of the deposition surface is equal to a linear velocity V2 of the motorized conveyor 7 and of the auxiliary motorized conveyor 8. In this step, the manipulation element 21 is returned into the cutting unit 14 and kept in the raised position, the counter-blade 16 is always in its second position and the blade 15 is always raised in its second position, i.e. blade 15 and counter-blade 16 are spaced from the continuous elongated element 2.

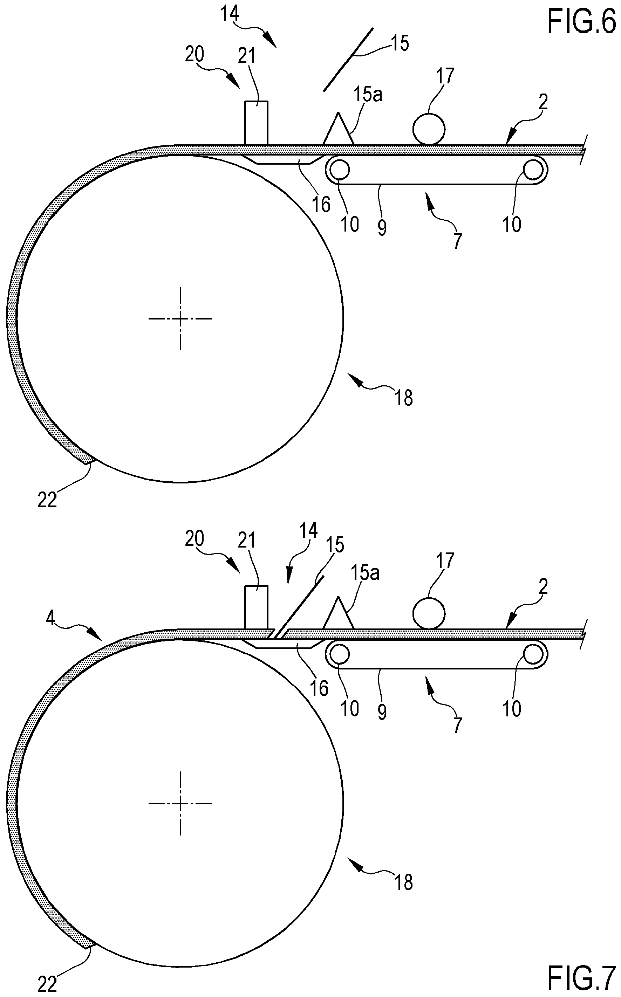

While the transfer wheel, the motorized conveyor 7 and the auxiliary motorized conveyor 8 are stationary, the manipulation element 21 and the retainer element 15a, respectively located downstream and upstream of the blade 15, are lowered against the continuous elongated element 2 to block it in the area of the counter-blade 16 which in the meantime has been returned to its first position (Figure 6).

The blade 15 is then lowered, moving it in its own lying plane, until it reaches its first position, so as to cut a piece 4 of the predefined length from the continuous elongated element 2 while the manipulation element 21 and the retainer element 15a keep the continuous elongated element 2 blocked at the cutting area (Figure 7).

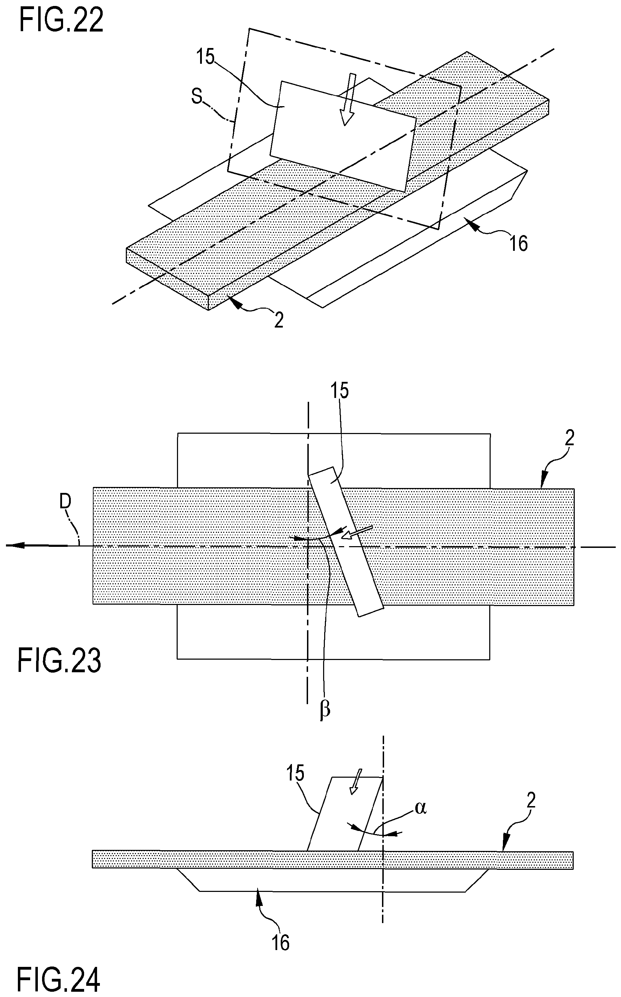

Given a first plane parallel to the advancement direction "D" and orthogonal to a support plane of the continuous elongated element 2 on the counter-blade 16, a first line of intersection between said first plane and the lying plane of the blade 15 delimits with a second plane orthogonal to the advancement direction "D" a first inclination angle "α" (Figure 24). This first inclination angle "α" is between 45° and 80° and is for example 70°.

A second line of intersection between the plane where the blade 15 lies and the support plane of the continuous elongated element 2 on the counter-blade 16 defines a second inclination angle "β" with the second plane (orthogonal to the advancement direction "D") (Figure 23). This second inclination angle "β" is between 0° and 60° and is for example 30°.

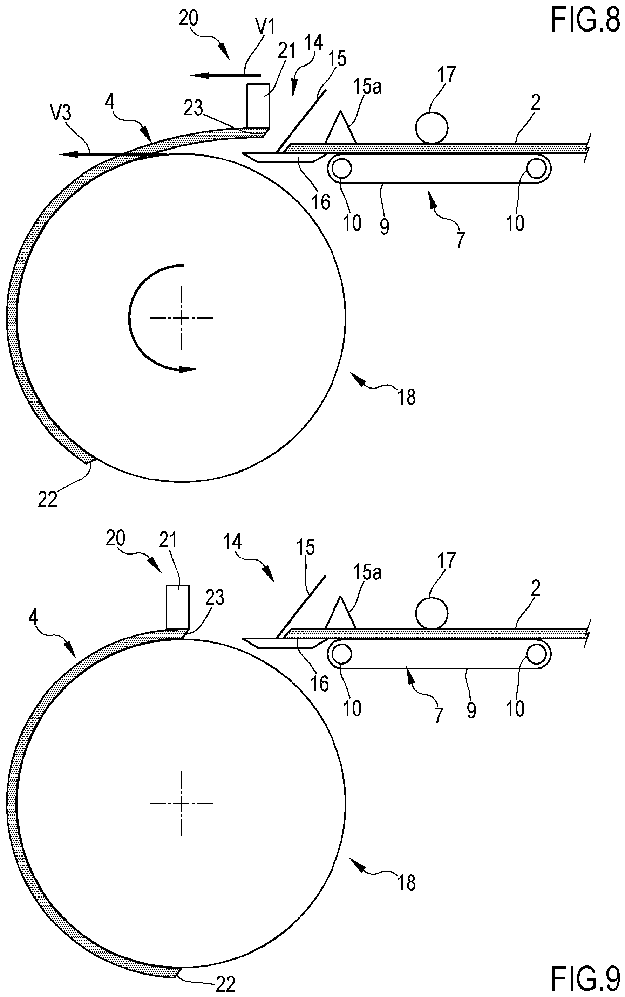

After cutting, the manipulation element 21 is engaged with a tail end 23 of the piece 4. While the suction source is active, the transfer wheel is rotated again in the first direction (counter-clockwise in Figure 8) and the manipulation element 21, which retains the tail end 23, is simultaneously moved, possibly lifting it, towards the transfer wheel (Figure 8), until the tail end 23 is also deposited on the radially external surface of the transfer wheel (Figure 9). A linear velocity V1 of the manipulation element 21 is equal to a linear velocity V3 of the deposition surface. In these steps (Figures 8 and 9), the motorized conveyor 7 and the auxiliary motorized conveyor 8 are stationary.

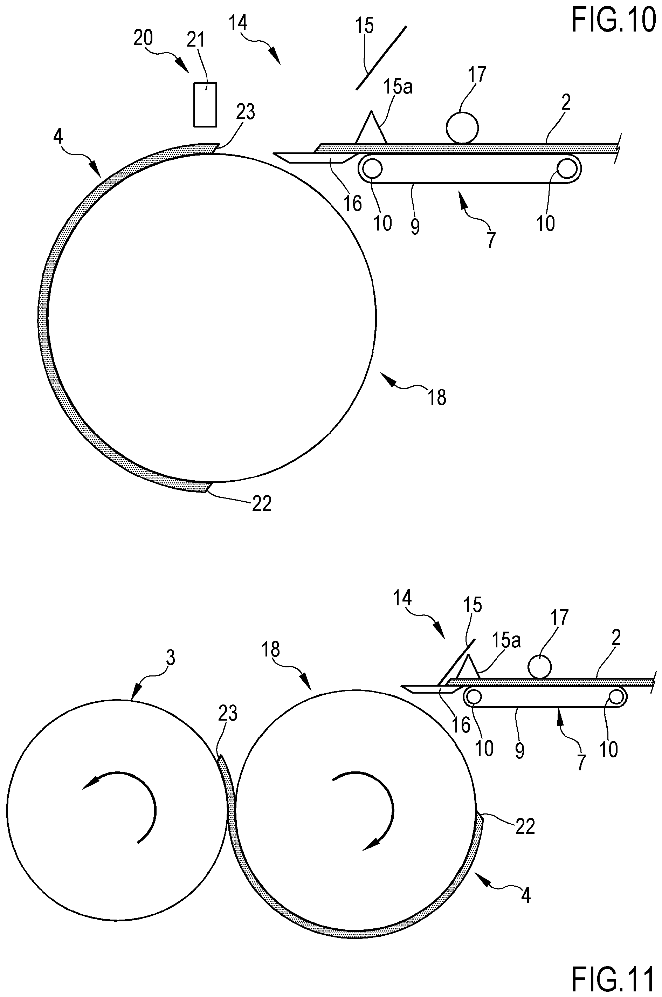

The manipulation element 21 is disengaged and moved away from the tail end 23 (Figures 10 and 11) and then brought back to the next head end of the continuous elongated element 2 placed in the cutting unit 14 to lock it, after having removed the retainer element 15a, and starting the cycle again.

The forming drum 3 and the transfer wheel are brought close together so as to approach the radially external surface of the transfer wheel to a surface radially external to the forming drum 3.

The transfer wheel is rotated in a second direction (clockwise in Figure 11) and the forming drum 3 is rotated in the first direction (counter-clockwise in Figure 11) so as to transfer the piece 4 from the transfer wheel onto the forming drum. 3. In this step, the motorized conveyor 7 and the auxiliary motorized conveyor 8 are stationary.

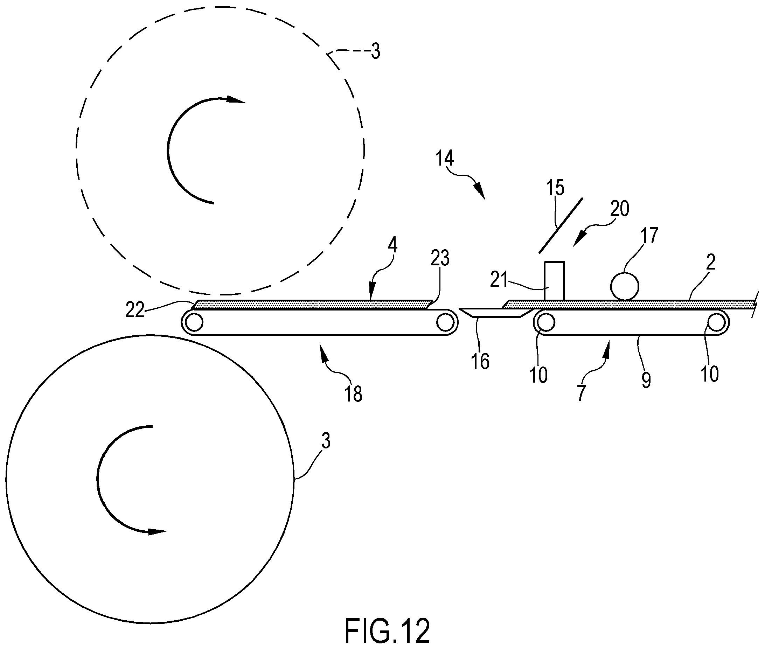

In the variant of Figure 12, the motorized transfer element 18 is a belt or motorized roller conveyor and the forming drum 3 may be placed above (shown in broken line) or below (in a continuous line) a distal end of the belt conveyor. The piece 4 is placed on an upper branch of the belt conveyor which then transfers it to the forming drum 3. To transfer the piece 4 from the belt conveyor to the forming drum 3, the forming drum 3 is rotated clockwise if it is placed above the distal end of the belt conveyor and counter-clockwise if it is placed under the distal end of the belt conveyor (Figure 12).

In a further variant, not shown, the motorized transfer element 18 is absent, i.e. instead of the motorized transfer element 18 (for example instead of the transfer wheel of Figure 1), the forming drum 3 is positioned and the deposition surface is a surface radially external to said forming drum 3.

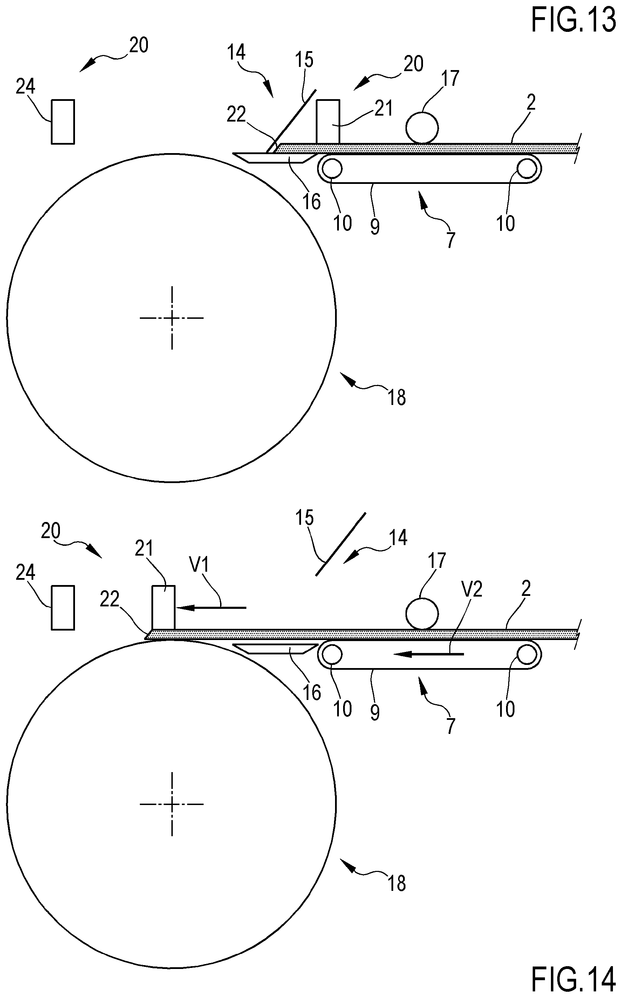

Figures 13 - 21 illustrate a different embodiment of the device 1 which differs from the device 1 described above (and illustrated in Figures 1 - 12) in that the retainer element 15a is not present and the manipulation unit 20 further comprises an auxiliary manipulation element 24.

The auxiliary manipulation element 24 is also movable (by means of the guides, mechanisms and actuators mentioned above and not illustrated) both horizontally, i.e. along a direction parallel to the upper branch of the motorized conveyor 7 and parallel to the upper surface of the counter-blade 16, and vertically. The manipulation element 21 and the auxiliary manipulation element 24 are independently movable with respect to each other.

The auxiliary manipulation element 24 may be similar or identical to the manipulation element 21 and comprise a gripper or a plurality of needles or a vacuum system.

In use and according to a variant of the method of the present invention, while the manipulation element 21 holds the continuous elongated element 2 against the counter-blade 16, as in Figure 2, the auxiliary manipulation element 24 is in a release position located beyond the deposition surface (Figure 13).

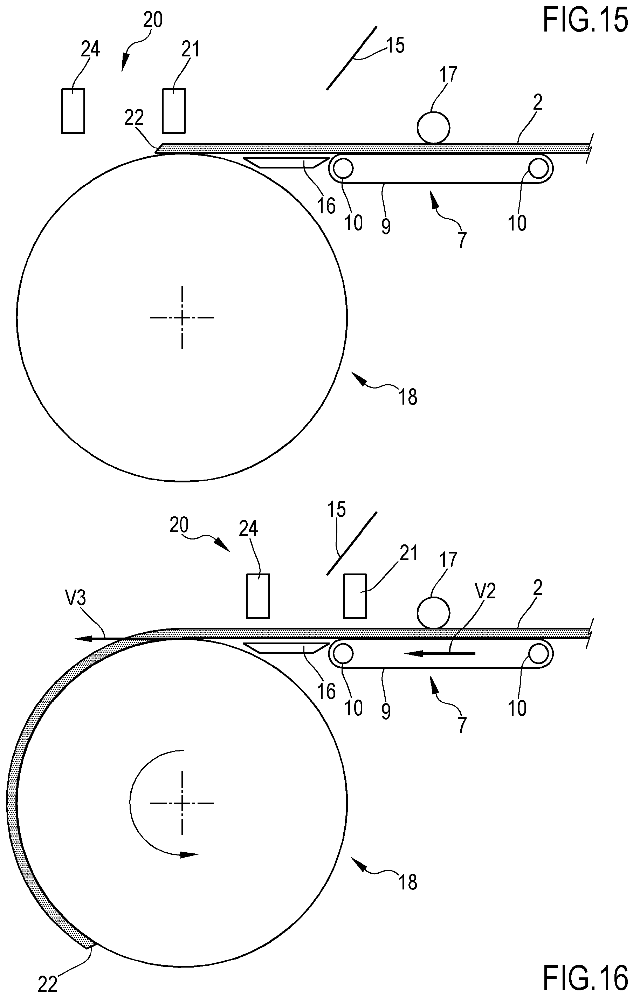

With the auxiliary manipulation element 24 always in the retracted position, the manipulation element 21 carries the head end 22 of the continuous elongated element 2 onto the transfer wheel and releases it onto the transfer wheel while the transfer wheel is stationary (Figures 14 and 15). A horizontal linear velocity V1 of the manipulation element 21 is equal to a linear velocity V2 of the upper branches of the motorized conveyor 7 and of the auxiliary motorized conveyor 8.

The transfer wheel is rotated in a first direction (counter-clockwise in Figure 16) and at the same time the motorized conveyor 7 and the auxiliary motorized conveyor 8 are set in motion, so that the continuous elongated element 2 winds partially on the transfer wheel for a predefined length measured using the metric wheel (figure 16). A linear velocity V3 of the deposition surface is equal to a linear velocity V2 of the motorized conveyor 7 and of the auxiliary motorized conveyor 8. In this step, the manipulation element 21 and the auxiliary manipulation element 24 are brought back into the cutting unit 14 by moving them together and are held in the raised position.

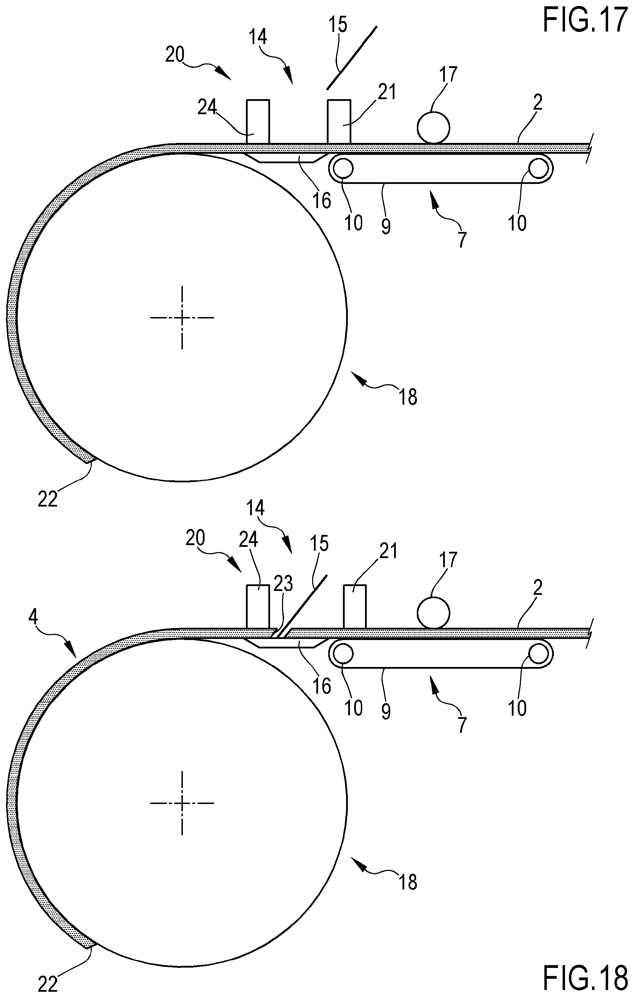

While the transfer wheel, the motorized conveyor 7 and the auxiliary motorized conveyor 8 are stationary, the manipulation element 21 and the auxiliary manipulation element 24, respectively located upstream and downstream of the blade 15, are lowered against the continuous elongated element 2 to block it on the counter-blade 16 which in the meantime has been returned to its first position (Figure 17).

The blade 15 is then lowered (or in another configuration, not shown, the blade 15 could be translated horizontally), moving it in its own lying plane, until it reaches its first position, so as to cut a piece 4 of the predefined length from the continuous elongated element 2 while the manipulation element 21 and the auxiliary manipulation element 15a keep the continuous elongated element 2 blocked at the cutting area (Figure 18).

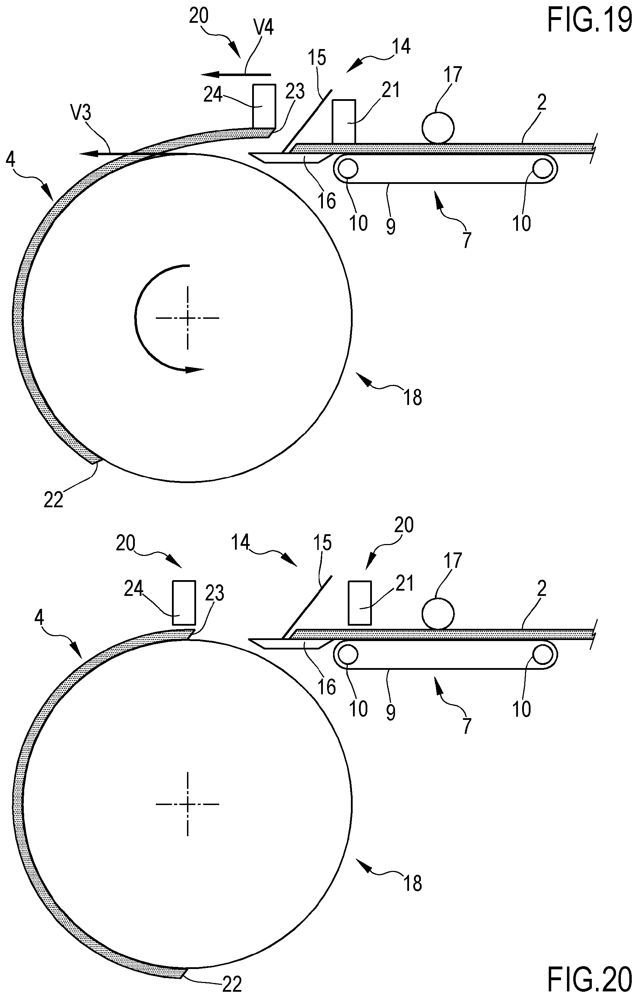

After cutting, the auxiliary manipulation element 24 is engaged with a tail end 23 of the piece 4. While the suction source is active, the transfer wheel is rotated again in the first direction (counter-clockwise in Figure 19) and the auxiliary manipulation element 24, which retains the tail end 23, is simultaneously moved, possibly lifting it, towards the transfer wheel (Figure 19), until the tail end 23 is also deposited on the radially external surface of the transfer wheel (Figure 20). A linear velocity V4 of the auxiliary manipulation element 24 is equal to a linear velocity V3 of the deposition surface. In these steps (Figures 19 and 20), the motorized conveyor 7 and the auxiliary motorized conveyor 8 are stationary.

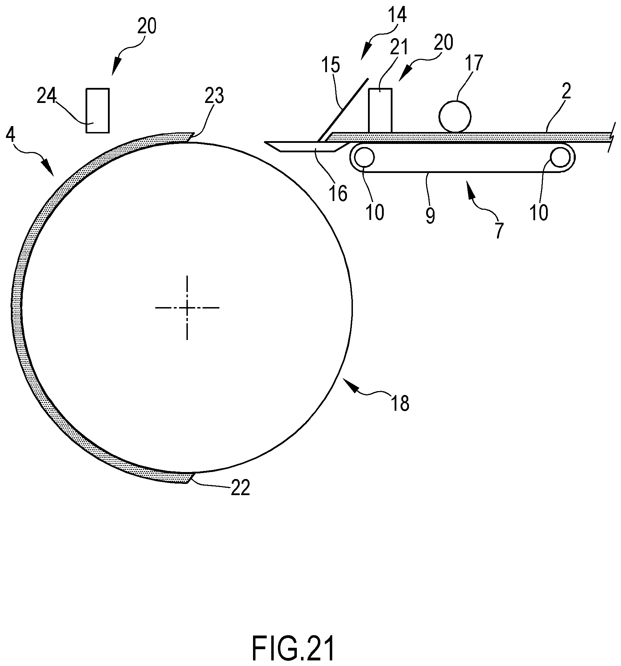

The auxiliary manipulation element 24 is then disengaged and moved away from the tail end 23 and returned to the release position (Figure 21) while the manipulation element 21 already blocks the subsequent head end of the continuous elongated element 2 so that the cycle can start over.

In all of the above embodiments and variants, the piece 4 is finally placed on a radially external surface of the forming drum or on a surface radially external to the forming drum. In fact, the forming drum 3 can already carry semi-finished products of the tyre 100 being processed, so that the piece 4 is deposited on a radially external surface of said semi-finished products which therefore lies radially external to the forming drum 3.

The elements of the device 1 described above may be doubled and placed side by side to simultaneously lay two pieces of respective continuous elongated elements towards a single forming drum 3 and lay them on two circumferential and axially spaced areas of the forming drum 3, for example to form the two sidewall inserts, one for each sidewall of the tyre 100.

## Claims

1. Method for feeding pieces of a continuous elongated element towards a forming drum, comprising:
i. picking up a head end (22) of a continuous elongated element (2) while a portion of the continuous elongated element (2) placed immediately upstream of the head end (22) is coupled to a motorized conveyor (7);
ii. transporting the head end (22) towards a deposition surface and releasing the head end (22) on said deposition surface;
iii. moving the deposition surface in order to move the head end (22) away from a cutting zone according to a predefined length of the continuous elongated element (2);
iv. blocking the continuous elongated element (2) at the cutting zone;
v. cutting the continuous elongated element (2) at the cutting zone while said continuous elongated element (2) is maintained blocked at the cutting zone, in order to define a piece (4) of the continuous elongated element (2) having said predefined length;
vi. picking up a tail end (23) of the piece (4);
vii. transporting the tail end (23) towards the deposition surface while said deposition surface is moved, in order to arrange the entire piece (4) on said deposition surface;
viii. releasing the tail end (22) on the deposition surface;
wherein, during step ii., the motorized conveyor (7) is moved by a motor (11) in order to accompany the continuous elongated element (2) and prevent deformations of said continuous elongated element (2);
wherein the step v. is executed by means of a blade (15) and a counter-blade (16), wherein, during step ii., the blade (15) and the counter-blade (16) are maintained spaced from the continuous elongated element (2) and, during step v., the continuous elongated element (2) rests on the counter-blade (16) while the blade (15) cuts said continuous elongated element (2).

2. Method according to claim 1, wherein, also during step iii., the motorized conveyor (7) is moved by the motor (11) in order to accompany the continuous elongated element (2) and prevent deformations of said continuous elongated element (2).

3. Method according to claim 1 or 2, wherein:
during step i. provision is made for picking up said head end (22) of said continuous elongated element (2) by means of a manipulation element (21);
during step ii. provision is made for transporting said head end (22) towards said deposition surface by means of said manipulation element (21);
during step iv. provision is made for blocking said continuous elongated element (2) at the cutting zone by means of said manipulation element (21);
during step v. provision is made for maintaining blocked said continuous elongated element (2) at the cutting zone by means of said manipulation element (21);
during step vi. provision is made for picking up said tail end (23) of the piece (4) by means of the manipulation element (21) or an auxiliary manipulation element (24),
during step vii. provision is made for transporting the tail end (23) by means of the manipulation element (21) or the auxiliary manipulation element (24) towards the deposition surface.

4. Method according to one of claims 1 to 3, wherein the motorized conveyor (7) has one end close to the counter-blade (16) and transports the continuous elongated element (2) up to above said counter-blade (16).

5. Method according to claim 3 or according to claim 4 when dependent on claim 3, wherein step iv. comprises: retaining the continuous elongated element (2) between the manipulation element (21) and the counter-blade (16).

6. Method according to one of the claims 1 to 5, wherein step v. comprises: arranging the blade (15) in a plane (S) that is angled with respect to a plane orthogonal to an advancement direction (D) of the continuous elongated element (2) and moving the blade (15) in said angled plane (S).

7. Method according to one of the claims from 1 to 6, wherein the deposition surface is a radially outer surface with respect to the forming drum (3); step iii. comprising: rotating the forming drum (3); step vii. comprising: transporting the tail end (23) towards the forming drum (3) while the forming drum (3) rotates; step viii. comprising: releasing the tail end (23) on the forming drum (3).

8. Method according to one of the claims from 1 to 7, wherein the deposition surface belongs to a motorized transfer element (18) placed upstream of a forming drum (3); step iii. comprising: moving the motorized transfer element (18); step vii. comprising: transporting the tail end (23) towards the motorized transfer element (18) while said motorized transfer element (18) is moved; step viii. comprising: releasing the tail end (23) on the motorized transfer element (18).

9. Device for feeding pieces of a continuous elongated element towards a forming drum, comprising:
a motorized conveyor (7) configured for transporting a continuous elongated element (2);
a cutting unit (14) placed immediately downstream of the motorized conveyor (7) and configured for cutting in pieces (4) the continuous elongated element (2) coming from the motorized conveyor (7);
a manipulation unit (20) comprising a manipulation element (21);
wherein the cutting unit (14) and the manipulation unit (20) are situated upstream of a deposition surface;
wherein the manipulation element (21) is movable between the cutting unit (14) and the deposition surface;
wherein the manipulation element (21) is configured for blocking the continuous elongated element (2) in the cutting unit (14) while the cutting unit (14) cuts a piece (4) from said continuous elongated element (2);
wherein the manipulation element (21) is configured for transporting a head end (22) or a tail end (23) of the piece (24) towards the deposition surface;
wherein the cutting unit (14) comprises a blade (15) and a counter-blade (16) movable between a first configuration, in which they are close to each other or in mutual contact, in order to cut the continuous elongated element (2) interposed between said blade (15) and said counter-blade (16), and a second configuration, in which the blade (15) and the counter-blade (16) are spaced from each other;
wherein the counter-blade (16) is movable between a first position, in which it lies in proximity to a path of the continuous elongated element (2) in order to support said continuous elongated element (2), and a second position, in which it lies spaced from said path, in order to allow the continuous elongated element (2) to advance without dragging against the counter-blade (16).

10. Device according to claim 9, wherein the motorized conveyor (7) is a belt or roller conveyor.

11. Device according to claim 9 or 10, wherein the blade (15) lies and is movable in a lying plane (S) that is angled with respect to a plane orthogonal to an advancement direction (D) of the motorized conveyor (7).

12. Device according to claim 9 or 10 or 11, wherein the cutting unit (14) also comprises a retainer element (15a) movable between a position close to the counter-blade (16), in order to retain the continuous elongated element (2) between the retainer element (15a) and the counter-blade (16), and a position spaced from the counter-blade (16).

13. Device according to one of the claims from 9 to 12, wherein the manipulation element (21), when it is in the cutting unit (14), is movable between a position close to the counter-blade (16), in order to block the continuous elongated element (2) in the cutting unit (14), and a position spaced from the counter-blade (16).

14. Device according to one of the claims from 9 to 13, wherein the manipulation element (21), when it is situated in the cutting unit (14), is positionable downstream of the blade (15), in order to be engaged with a tail end (23) of the piece (4) to be cut, or upstream of the blade (15), in order to be engaged with a head end (22) of a subsequent piece (4) to be cut.

15. Device according to one of the claims from 9 to 14, wherein the manipulation unit (20) comprises an auxiliary manipulation element (24), wherein the auxiliary manipulation element (24) is configured for blocking the continuous elongated element (2) in the cutting unit (14) while the cutting unit (14) cuts the piece (4) from said continuous elongated element (2); wherein the manipulation element (21) is configured for transporting the head end (22) of the piece (4) towards the deposition surface and the auxiliary manipulation element (24) is configured for transporting the tail end (23) of the piece (4) towards the deposition surface.

## Patentansprüche

1. Verfahren zum Zuführen von Stücken eines kontinuierlichen länglichen Elements zu einer Formtrommel, umfassend:
i. Aufnehmen eines Kopfendes (22) eines kontinuierlichen länglichen Elements (2), während ein Abschnitt des kontinuierlichen länglichen Elements (2), das unmittelbar stromaufwärts des Kopfendes (22) platziert ist, mit einem motorisierten Förderer (7) gekoppelt ist;
ii. Transportieren des Kopfendes (22) zu einer Ablageoberfläche und Freigeben des Kopfendes (22) auf der Ablageoberfläche;
iii. Bewegen der Ablageoberfläche, um das Kopfende (22) von einer Schneidzone gemäß einer vordefinierten Länge des kontinuierlichen länglichen Elements (2) weg zu bewegen;
iv. Blockieren des kontinuierlichen länglichen Elements (2) in der Schneidzone;
v. Schneiden des kontinuierlichen länglichen Elements (2) in der Schneidzone, während das kontinuierliche längliche Element (2) in der Schneidzone blockiert gehalten wird, um ein Stück (4) des kontinuierlichen länglichen Elements (2) zu definieren, das die vordefinierte Länge aufweist;
vi. Aufnehmen eines hinteren Endes (23) des Stücks (4);
vii. Transportieren des hinteren Endes (23) zu der Ablageoberfläche, während die Ablageoberfläche bewegt wird, um das gesamte Stück (4) auf der Ablageoberfläche anzuordnen;
viii. Freigeben des hinteren Endes (22) auf der Ablageoberfläche;
wobei während Schritt ii. der motorisierte Förderer (7) von einem Motor (11) bewegt wird, um das kontinuierliche längliche Element (2) zu begleiten und Verformungen des kontinuierlichen länglichen Elements (2) zu verhindern;
wobei der Schritt v. mittels einer Klinge (15) und einer Gegenklinge (16) ausgeführt wird,
wobei während Schritt ii. die Klinge (15) und die Gegenklinge (16) von dem kontinuierlichen länglichen Element (2) beabstandet gehalten werden und während Schritt v. das kontinuierliche längliche Element (2) auf der Gegenklinge (16) aufliegt, während die Klinge (15) das kontinuierliche längliche Element (2) schneidet.

2. Verfahren nach Anspruch 1, wobei auch während Schritt iii. der motorisierte Förderer (7) von dem Motor (11) bewegt wird, um das kontinuierliche längliche Element (2) zu begleiten und Verformungen des kontinuierlichen länglichen Elements (2) zu verhindern.

3. Verfahren nach Anspruch 1 oder 2, wobei:
während Schritt i. Vorkehrungen zum Aufnehmen des Kopfendes (22) des kontinuierlichen länglichen Elements (2) mittels eines Manipulationselements (21) getroffen werden;
während Schritt ii. Vorkehrungen zum Transportieren des Kopfendes (22) zu der Ablageoberfläche mittels des Manipulationselements (21) getroffen werden;
während Schritt iv. Vorkehrungen zum Blockieren des kontinuierlichen länglichen Elements (2) in der Schneidzone mittels des Manipulationselements (21) getroffen werden;
während Schritt v. Vorkehrungen getroffen werden, das kontinuierliche längliche Element (2) in der Schneidzone mittels des Manipulationselements (21) blockiert zu halten;
während Schritt vi. Vorkehrungen zum Aufnehmen des hinteren Endes (23) des Stücks (4) mittels des Manipulationselements (21) oder eines Hilfsmanipulationselements (24) getroffen werden, während Schritt vii. Vorkehrungen zum Transportieren des hinteren Endes (23) mittels des Manipulationselements (21) oder des Hilfsmanipulationselements (24) zu der Ablageoberfläche getroffen werden.

4. Verfahren nach einem der Ansprüche 1 bis 3, wobei der motorisierte Förderer (7) ein Ende nahe der Gegenklinge (16) aufweist und das kontinuierliche längliche Element (2) bis oberhalb der Gegenklinge (16) transportiert.

5. Verfahren nach Anspruch 3 oder nach Anspruch 4, wenn abhängig von Anspruch 3, wobei Schritt iv. umfasst: Halten des kontinuierlichen länglichen Elements (2) zwischen dem Manipulationselement (21) und der Gegenklinge (16).

6. Verfahren nach einem der Ansprüche 1 bis 5, wobei Schritt v. umfasst: Anordnen der Klinge (15) in einer Ebene (S), die in Bezug auf eine Ebene orthogonal zu einer Vorschubrichtung (D) des kontinuierlichen länglichen Elements (2) abgewinkelt ist, und Bewegen der Klinge (15) in der abgewinkelten Ebene (S).

7. Verfahren nach einem der Ansprüche 1 bis 6, wobei die Ablageoberfläche eine radial äußere Oberfläche in Bezug auf die Formtrommel (3) ist; wobei Schritt iii. umfasst: Drehen der Formtrommel (3); wobei Schritt vii. umfasst: Transportieren des hinteren Endes (23) zu der Formtrommel (3), während sich die Formtrommel (3) dreht; wobei Schritt viii. umfasst: Freigeben des hinteren Endes (23) auf der Formtrommel (3).

8. Verfahren nach einem der Ansprüche 1 bis 7, wobei die Ablageoberfläche zu einem motorisierten Transferelement (18) gehört, das stromaufwärts einer Formtrommel (3) platziert ist; wobei Schritt iii. umfasst: Bewegen des motorisierten Transferelements (18); wobei Schritt vii. umfasst: Transportieren des hinteren Endes (23) zu dem motorisierten Transferelement (18), während das motorisierte Transferelement (18) bewegt wird; wobei Schritt viii. umfasst: Freigeben des hinteren Endes (23) auf dem motorisierten Transferelement (18).

9. Vorrichtung zum Zuführen von Stücken eines kontinuierlichen länglichen Elements zu einer Formtrommel, umfassend:
einen motorisierten Förderer (7), der zum Transportieren eines kontinuierlichen länglichen Elements (2) konfiguriert ist;
eine Schneideinheit (14), die unmittelbar stromabwärts des motorisierten Förderers (7) platziert ist und zum Schneiden des von dem motorisierten Förderer (7) kommenden kontinuierlichen länglichen Elements (2) in Stücke (4) konfiguriert ist;
eine Manipulationseinheit (20), die ein Manipulationselement (21) umfasst;
wobei die Schneideinheit (14) und die Manipulationseinheit (20) stromaufwärts einer Ablageoberfläche gelegen sind;
wobei das Manipulationselement (21) zwischen der Schneideinheit (14) und der Ablageoberfläche bewegbar ist;
wobei das Manipulationselement (21) zum Blockieren des kontinuierlichen länglichen Elements (2) in der Schneideinheit (14) konfiguriert ist, während die Schneideinheit (14) ein Stück (4) aus dem kontinuierlichen länglichen Element (2) schneidet;
wobei das Manipulationselement (21) zum Transportieren eines Kopfendes (22) oder eines hinteren Endes (23) des Stücks (24) zu der Ablageoberfläche konfiguriert ist;
wobei die Schneideinheit (14) eine Klinge (15) und eine Gegenklinge (16) umfasst, die zwischen einer ersten Konfiguration, in der sie nahe beieinander oder in gegenseitigem Kontakt sind, um das kontinuierliche längliche Element (2), das zwischen der Klinge (15) und der Gegenklinge (16) eingefügt ist, zu schneiden, und einer zweiten Konfiguration bewegbar sind, in der die Klinge (15) und die Gegenklinge (16) voneinander beabstandet sind;
wobei die Gegenklinge (16) zwischen einer ersten Position, in der sie in der Nähe eines Weges des kontinuierlichen länglichen Elements (2) liegt, um das kontinuierliche längliche Element (2) zu stützen, und einer zweiten Position bewegbar ist, in der sie von dem Weg beabstandet liegt, damit das kontinuierliche längliche Element (2) ohne Schleifen an der Gegenklinge (16) vorrücken kann.

10. Vorrichtung nach Anspruch 9, wobei der motorisierte Förderer (7) ein Band- oder Walzenförderer ist.

11. Vorrichtung nach Anspruch 9 oder 10, wobei die Klinge (15) in einer liegenden Ebene (S) liegt und bewegbar ist, die in Bezug auf eine Ebene orthogonal zu einer Vorschubrichtung (D) des motorisierten Förderers (7) abgewinkelt ist.

12. Vorrichtung nach Anspruch 9 oder 10 oder 11, wobei die Schneideinheit (14) auch ein Halteelement (15a) umfasst, das zwischen einer Position nahe der Gegenklinge (16), um das kontinuierliche längliche Element (2) zwischen dem Halteelement (15a) und der Gegenklinge (16) zu halten, und einer von der Gegenklinge (16) beabstandeten Position bewegbar ist.

13. Vorrichtung nach einem der Ansprüche 9 bis 12, wobei das Manipulationselement (21), wenn es sich in der Schneideinheit (14) befindet, zwischen einer Position nahe der Gegenklinge (16), um das kontinuierliche längliche Element (2) in der Schneideinheit (14) zu blockieren, und einer von der Gegenklinge (16) beabstandeten Position bewegbar ist.

14. Vorrichtung nach einem der Ansprüche 9 bis 13, wobei das Manipulationselement (21), wenn es in der Schneideinheit (14) gelegen ist, stromabwärts der Klinge (15), um mit einem hinteren Ende (23) des zu schneidenden Stücks (4) in Eingriff gebracht zu werden, oder stromaufwärts der Klinge (15) positionierbar ist, um mit einem Kopfende (22) eines nachfolgenden zu schneidenden Stücks (4) in Eingriff gebracht zu werden.

15. Vorrichtung nach einem der Ansprüche 9 bis 14, wobei die Manipulationseinheit (20) ein Hilfsmanipulationselement (24) umfasst, wobei das Hilfsmanipulationselement (24) zum Blockieren des kontinuierlichen länglichen Elements (2) in der Schneideinheit (14) konfiguriert ist, während die Schneideinheit (14) das Stück (4) aus dem kontinuierlichen länglichen Element (2) schneidet; wobei das Manipulationselement (21) zum Transportieren des Kopfendes (22) des Stücks (4) zu der Ablageoberfläche konfiguriert ist und das Hilfsmanipulationselement (24) zum Transportieren des hinteren Endes (23) des Stücks (4) zu der Ablageoberfläche konfiguriert ist.

## Revendications

1. Procédé d'alimentation de pièces d'un élément allongé continu vers un tambour de mise en forme, comprenant :
i. la saisie d'une extrémité avant (22) d'un élément allongé continu (2) pendant qu'une partie de l'élément allongé continu (2) placée immédiatement en amont de l'extrémité avant (22) est couplée à un convoyeur motorisé (7) ;
ii. le transport de l'extrémité avant (22) vers une surface de dépôt et la libération de l'extrémité avant (22) sur ladite surface de dépôt ;
iii. le déplacement de la surface de dépôt afin d'éloigner l'extrémité avant (22) d'une zone de découpe selon une longueur prédéfinie de l'élément allongé continu (2) ;
iv. le blocage de l'élément allongé continu (2) au niveau de la zone de découpe ;
v. la découpe de l'élément allongé continu (2) au niveau de la zone de découpe pendant que ledit élément allongé continu (2) est maintenu bloqué au niveau de la zone de découpe, afin de définir une pièce (4) de l'élément allongé continu (2) présentant ladite longueur prédéfinie ;
vi. la saisie d'une extrémité arrière (23) de la pièce (4) ;
vii. le transport de l'extrémité arrière (23) vers la surface de dépôt pendant que ladite surface de dépôt est déplacée, afin de disposer la pièce entière (4) sur ladite surface de dépôt ;
viii. la libération de l'extrémité arrière (22) sur la surface de dépôt ;
dans lequel, au cours de l'étape ii., le convoyeur motorisé (7) est déplacé par un moteur (11) afin d'accompagner l'élément allongé continu (2) et d'empêcher les déformations dudit élément allongé continu (2) ;
dans lequel l'étape v. est exécutée au moyen d'une lame (15) et d'une contre-lame (16),
dans lequel, au cours de l'étape ii., la lame (15) et la contre-lame (16) sont maintenues espacées de l'élément allongé continu (2) et, au cours de l'étape v., l'élément allongé continu (2) repose sur la contre-lame (16) pendant que la lame (15) découpe ledit élément allongé continu (2).

2. Procédé selon la revendication 1, dans lequel, également au cours de l'étape iii., le convoyeur motorisé (7) est déplacé par le moteur (11) afin d'accompagner l'élément allongé continu (2) et d'empêcher les déformations dudit élément allongé continu (2).

3. Procédé selon la revendication 1 ou 2, dans lequel :
au cours de l'étape i., il est prévu de saisir ladite extrémité avant (22) dudit élément allongé continu (2) au moyen d'un élément de manipulation (21) ;
au cours de l'étape ii., il est prévu de transporter ladite extrémité avant (22) vers ladite surface de dépôt au moyen dudit élément de manipulation (21) ;
au cours de l'étape iv., il est prévu de bloquer ledit élément allongé continu (2) au niveau de la zone de découpe au moyen dudit élément de manipulation (21) ;
au cours de l'étape v., il est prévu de maintenir bloqué ledit élément allongé continu (2) au niveau de la zone de découpe au moyen dudit élément de manipulation (21) ;
au cours de l'étape vi., il est prévu de saisir ladite extrémité arrière (23) de la pièce (4) au moyen de l'élément de manipulation (21) ou d'un élément auxiliaire de manipulation (24), au cours de l'étape vii., il est prévu de transporter l'extrémité arrière (23) au moyen de l'élément de manipulation (21) ou de l'élément auxiliaire de manipulation (24) vers la surface de dépôt.

4. Procédé selon l'une des revendications 1 à 3, dans lequel le convoyeur motorisé (7) présente une extrémité proche de la contre-lame (16) et transporte l'élément allongé continu (2) jusqu'au-dessus de ladite contre-lame (16).

5. Procédé selon la revendication 3 ou selon la revendication 4 lorsqu'elle dépend de la revendication 3, dans lequel l'étape iv. comprend : la retenue de l'élément allongé continu (2) entre l'élément de manipulation (21) et la contre-lame (16).

6. Procédé selon l'une des revendications 1 à 5, dans lequel l'étape v. comprend : la disposition de la lame (15) dans un plan (S) qui est incliné par rapport à un plan orthogonal à une direction d'avancement (D) de l'élément allongé continu (2) et le déplacement de la lame (15) dans ledit plan incliné (S).

7. Procédé selon l'une des revendications 1 à 6, dans lequel la surface de dépôt est une surface radialement extérieure par rapport au tambour de mise en forme (3) ; l'étape iii. comprenant : la rotation du tambour de mise en forme (3) ; l'étape vii. comprenant : le transport de l'extrémité arrière (23) vers le tambour de mise en forme (3) pendant que le tambour de mise en forme (3) tourne ; l'étape viii. comprenant : la libération de l'extrémité arrière (23) sur le tambour de mise en forme (3).

8. Procédé selon l'une des revendications 1 à 7, dans lequel la surface de dépôt appartient à un élément de transfert motorisé (18) placé en amont d'un tambour de mise en forme (3) ; l'étape iii. comprenant : le déplacement de l'élément de transfert motorisé (18) ; l'étape vii. comprenant : le transport de l'extrémité arrière (23) vers l'élément de transfert motorisé (18) pendant que ledit élément de transfert motorisé (18) est déplacé ; l'étape viii. comprenant : la libération de l'extrémité arrière (23) sur l'élément de transfert motorisé (18).

9. Dispositif d'alimentation de pièces d'un élément allongé continu vers un tambour de mise en forme, comprenant :
un convoyeur motorisé (7) configuré pour transporter un élément allongé continu (2) ;
une unité de découpe (14) placée immédiatement en aval du convoyeur motorisé (7) et configurée pour couper en pièces (4) l'élément allongé continu (2) provenant du convoyeur motorisé (7) ;
une unité de manipulation (20) comprenant un élément de manipulation (21) ;
dans lequel l'unité de découpe (14) et l'unité de manipulation (20) sont situées en amont d'une surface de dépôt ;
dans lequel l'élément de manipulation (21) est mobile entre l'unité de découpe (14) et la surface de dépôt ;
dans lequel l'élément de manipulation (21) est configuré pour bloquer l'élément allongé continu (2) dans l'unité de découpe (14) pendant que l'unité de découpe (14) découpe une pièce (4) dudit élément allongé continu (2) ;
dans lequel l'élément de manipulation (21) est configuré pour transporter une extrémité avant (22) ou une extrémité arrière (23) de la pièce (24) vers la surface de dépôt ;
dans lequel l'unité de découpe (14) comprend une lame (15) et une contre-lame (16) mobiles entre une première configuration, dans laquelle elles sont proches l'une de l'autre ou en contact mutuel, afin de découper l'élément allongé continu (2) interposé entre ladite lame (15) et ladite contre-lame (16), et une seconde configuration, dans laquelle la lame (15) et la contre-lame (16) sont espacées l'une de l'autre ;
dans lequel la contre-lame (16) est mobile entre une première position, dans laquelle elle se trouve à proximité d'un trajet de l'élément allongé continu (2) afin de supporter ledit élément allongé continu (2), et une seconde position, dans laquelle elle se trouve espacée dudit trajet, afin de permettre à l'élément allongé continu (2) d'avancer sans traîner contre la contre-lame (16).

10. Dispositif selon la revendication 9, dans lequel le convoyeur motorisé (7) est un convoyeur à bande ou à rouleaux.

11. Dispositif selon la revendication 9 ou 10, dans lequel la lame (15) est située et est mobile dans un plan horizontal (S) qui est incliné par rapport à un plan orthogonal à une direction d'avancement (D) du convoyeur motorisé (7).

12. Dispositif selon la revendication 9 ou 10 ou 11, dans lequel l'unité de découpe (14) comprend également un élément de retenue (15a) mobile entre une position proche de la contre-lame (16), afin de retenir l'élément allongé continu (2) entre l'élément de retenue (15a) et la contre-lame (16), et une position espacée de la contre-lame (16).

13. Dispositif selon l'une des revendications 9 à 12, dans lequel l'élément de manipulation (21), lorsqu'il est dans l'unité de découpe (14), est mobile entre une position proche de la contre-lame (16), afin de bloquer l'élément allongé continu (2) dans l'unité de découpe (14), et une position écartée de la contre-lame (16).

14. Dispositif selon l'une des revendications 9 à 13, dans lequel l'élément de manipulation (21), lorsqu'il est situé dans l'unité de découpe (14), est positionnable en aval de la lame (15), afin d'être engagé avec une extrémité arrière (23) de la pièce (4) à découper, ou en amont de la lame (15), afin d'être engagé avec une extrémité avant (22) d'une pièce (4) suivante à découper.

15. Dispositif selon l'une des revendications 9 à 14, dans lequel l'unité de manipulation (20) comprend un élément auxiliaire de manipulation (24), dans lequel l'élément auxiliaire de manipulation (24) est configuré pour bloquer l'élément allongé continu (2) dans l'unité de découpe (14) pendant que l'unité de découpe (14) découpe la pièce (4) à partir dudit élément allongé continu (2) ; dans lequel l'élément de manipulation (21) est configuré pour transporter l'extrémité avant (22) de la pièce (4) vers la surface de dépôt et l'élément de manipulation auxiliaire (24) est configuré pour transporter l'extrémité arrière (23) de la pièce (4) vers la surface de dépôt.
